# EUROPEAN PATENT SPECIFICATION

(11) **EP 1 209 238 B1**
(45) Date of publication and mention of the grant of the patent: **19.10.2005**
(21) Application number: 01936956.0
(22) Date of filing: 11.06.2001
(51) Int. Cl.: C12P 1/00, A01N 65/00

(54) **PROCESS FOR PRODUCING PLANT-ORIGIN ANTIBACTERIAL SUBSTANCE**
VERFAHREN ZUR HERSTELLUNG EINER AUS PFLANZEN STAMMENDEN, ANTIBAKTERIELLEN SUBSTANZ
PROCEDE DE PRODUCTION D'UNE SUBSTANCE ANTIBACTERIENNE D'ORIGINE VEGETALE

(30) Priority: 23.06.2000 JP 2000189614
(43) Date of publication of application: 29.05.2002
(73) Proprietor: SAKAI, Takuo, Sakai-shi Osaka 590-0132 (JP)
(72) Inventor: SAKAI, Takuo, Sakai-shi Osaka 590-0132 (JP)
(74) Representative: Doireau, Marc
(86) International application number: PCT/JP2001/004929
(87) International publication number: WO 2001/098519

(56) References cited:
- EP-A- 0 609 779
- EP-A- 0 880 894
- WO-A-01/07135
- WO-A-97/30718
- US-A- 3 624 211
- US-A- 5 792 726
- US-A- 6 063 382
- YAMADA YASUMASA ET AL.: 'Identification of kaempferol from the leaves of diospyros kaki and its antimicrobial activity against streptococcus mutans' BIOCONTROL SCIENCE vol. 4, no. 2, 1999, pages 97 - 100, XP002942902
- NAKAMURA TAKASHI ET AL.: 'Enzymatic maceration of vegetables with protopectinase' JOURNAL OF FOOD SCIENCE vol. 60, no. 3, 1995, pages 468 - 472, XP002942903
- FOOD MICROBIOLOGY, vol. 15, 1998, pages 367-378,
- KYU HANG KYUNG ET AL JOURNAL OF FOOD SCIENCE vol. 59, no. 1, 1994, pages 125 - 129
- JOURNAL OF ETHNOPHARMACOLOGY, vol. 27, no. 3, 1989, pages 285-295,
- JOURNAL OF FOOD SCIENCE, vol. 59, no. 2, 1994, pages 350-355,
- AGRICULTURAL CHEMISTRY AND BIOTECHNOLOGY, vol. 39, no. 4, 1996, pages 315-319,
- THE PEDIATRIC INFECTIOUS DISEASE JOURNAL, vol. 12, no. 7, 1993, pages 613-614,
- PHARMAZIE, vol. 51, no. 10, 1996, pages 777-778,
- JOURNAL OF APPLIED BACTERIOLOGY, vol. 76, no. 2, 1994, pages 135-141,
- INDIAN JOURNAL OF PHARMACY, vol. 38, no. 1, 1976, pages 21-22,

## Description

### Technical Field

The present invention relates to a process of producing an antibacterial substance derived from a plant which includes disintegrating at least a part of tissue of the plant and releasing the antibacterial substance therefrom, and bactericidal or bacteriostatic compositions containing as an active ingredient the antibacterial substance obtained by the process.

### Background Art

Microorganisms, especially bacteria which form spores (spore forming bacteria), often contaminate food and do great economic damage. Processed food and others are inviting targets for contamination by spore forming bacteria. If even one spore remains after sterilization of food, bacteria easily proliferate to damage the quality of the food significantly.

Among such spore forming bacteria, there exist those producing poisonous matters (cereus toxin, botulinum toxin) which may bring death to human beings such as aerobic Bacillus cereus and anaerobic Clostridium botulinum.

Accordingly, the prevention and extermination of spore forming bacteria is an important problem to solve in the food industry. However, spore forming bacteria always exist in agricultural products which are raw materials, and often contaminate processed food.

Bacterial spores can survive even under conditions which generally kill bacteria such as high temperature, presence of organic solvents, dryness and the like. For example, the bacterial spores do not die out when left in boiling water for 20 minutes, and they do not die out under a condition of 2 % or less moisture.

Accordingly, even food having been sterilized at high temperatures is often contaminated with spore forming bacteria. Furthermore, since spores are smaller than cells, they cannot be removed by bacteria elimination such as microfiltration in many cases. This is also a reason for difficult control of spore forming bacteria.

For the above reasons, various kinds of substances inhibiting proliferation of spore forming bacteria have been studied, but no substances have been found that are food-hygienically safe and effective.

EP 0 609 779 discloses an antimicrobial composition from plant which is obtained by dry distillation.

US 3,624,211 discloses a process for extracting a bactericidal and fungicidal product from plant, wherein organic or inorganic solvents are used.

WO 97/30718 discloses a process for preparing an antimicrobial composition from plant by steam distillation.

US 5,792,726 discloses an antimicrobial herbal composition which is extracted from Artemesia plant also by steam distillation.

EP-A- 0 880 894 discloses a bactericide against food-bome pathogenic bacteria, which is obtained from Stevia plant. There is no limitation on extracting method which can be used, however, extraction with hot water, extraction with cold water and extraction with a lower alcohol are mentioned as examples.

US 6,063,382 discloses a bacteriostatic and antibacterial agent which contains a mango kemel triturate or extract as an effective component. Extraction of the antibacterial agent can be achieved by the use of solvent, which is removed afterwards by heating.

Tissue of plants of the higher orders is constructed of aggregates of cells, and pectins play an important part in this construction. In plant tissue, pectins bind via rhamnogalactan to cellulose or hemicellulose which constitutes cell walls, and then form so-called middle lamellae of multi-layered structure by chelate bond via a bivalent metal such as calcium to bond cells and form tissue.

Insoluble pectins in this form are referred to as protopectins, and enzymes which have the activity of acting on protopectins and freeing pectin substances are generally referred to as protopectinases (Fermentation and Industry : 37, 928-938, 1978; Agric.Biol.Chem., 52, 1091-1093, 1988; Agric.Biol.Chem., 53, 1213-1223, 1989; Agric.Biol.Chem., 54, 879-889, 1990; Eur.J.Biochem., 226, 285-291, 1994; Biosci.Biotech.Biochem., 58, 353-358, 1994). If protopectinases are allowed to act on plant tissue, cells are isolated to be single cells while water-soluble pectin substances are released.

### Disclosure of Invention

Noting that dead plants are easily decomposed by bacteria while living plants are not contaminated by ordinary bacteria except for plant pathogenic microbes, the inventor has studied on this biological mechanism, finally to find out that substances solubilized from meddle lamellae together with pectins when protopectinases act on plants have the nature of inhibiting proliferation of bacteria. Thus the present invention has been accomplished.

According to the present invention, there are provided a process of producing an antibacterial substance from a plant which includes disintegrating at least a part of tissue of the plant and releasing the antibacterial substance, and a bactericidal or bacteriostatic composition containing as an active ingredient the antibacterial substance obtained by the process.

### Brief Description of Drawings

Fig. 1 shows results of a proliferation inhibition test of a supernatant of onion which is single-celled by treatment with protopectinase - S against Bacillus subtilis. A halo observed around a hole for placing a liquid to be tested indicates the inhibition of proliferation; and
Fig. 2 shows an example of a proliferation inhibition test of a plant extract treated with protopectinase - S against Bacillus subtilis.

### Best Mode for Carrying Out the Invention

The plant used for the process of the present invention is not particularly limited, and may be a dicotyledon or a monocotyledon. As examples of dicotyledons, may be included Ranales (water lily, peony), Piperales (Houttuynia cordata, pepper), Cucurbitales (pumpkin, dishcloth gourd), Opuntiales (cactus), Rosales (cherry, pear, bean, strawberry, loquat, arrowroot), Rutales (mango, orange, lemon), Plantaginales (plantain), Umbelliflorae (dropwort, honewort, carrot), Asterales (Japanese butterbur, dandilions, edible burdock, garland chrysanthemum, mugwort), Polemoniales (potato, capsicum, tobacco, sesame, sweet potato), Rhoeadales (poppy, Chinese cabbage, cabbage, turnip, brassica), Malvales (cotton, gumbo) and the like. As examples of monocotyledons, may be mentioned Liliales (lily, garlic, onion), Arales (colocasis), Amaryllidales (welsh onion, Chinese chive), Iridales (iris, sweet flag), Dioscoreales (Chinese yam, yam), Agavales (agave), Orchidales (orchid), Graminales (rice, barley, the Korean lawn grass, cane, corn) and the like.

Any parts of these plants such as terrestrial stems, subterranean stems, leaves, roots, flowers, fruits, seeds, buds and sprouts may be used. For example, terrestrial stems and leaves of cabbage, garland chrysanthemum, mugwort, dandelion and dropwort, subterranean stems of potato and onion, roots of sweet potato and carrot, flowers of cotton, fruits of pumpkin and sprout of bean may be used.

The plants may be used as they are or after they are cut or ground into an appropriate size. However, in order to disintegrate plant tissue sufficiently, the plants may preferably be chipped into an appropriate size, for example, a square of about 0.5 to 1 cm. If the plants have sizes larger than this range, the plants may be ground by combining a mechanical means such as a Waring blender.

The plants release antibacterial substances existing in intercellular spaces by being treated with an enzyme capable of separating plant cells into individual cells under stirring.

The enzyme may be any enzyme that can act on a protopectin to release a pectin substance. The enzyme may be used singly, or two or more kinds of enzymes may be combined for use.

Examples of enzymes that may be included protopectinases, polymethyl galacturonases, polygalacturonase, arabinases and rhamnogalacturonases. More particularly, protopectinase - F, protopectinase - S, protopectinase - L, protopectinase - T, protopectinase - C, protopectinase - N and polymethyl galacturonase SX1 may preferably be used.

Treatment conditions may be selected as appropriate depending upon the kind of the enzyme and the kind and weight of the plant. In the case where a protopectinase or polymethyl galacturonase is used as an enzyme, the enzyme is added in an amount of 1,500 to 15,000 units, preferably 1,500 to 10,000 units, more preferably 2,000 to 5,000 units with respect to 10 g (wet weight) of the plant. The treatment is carried out at 30 to 40°C, ideally at about 37°C for one to ten hours.

The plant can be treated with the enzyme in acetate buffer, phosphate buffer, Tris HCl buffer, physiologic saline or water, within the range of pH2.0 to 10.0, preferably at pH 7.0, and especially it is preferable to carry out the treatment in the acetate buffer, phosphate buffer and Tris HCl buffer. If the weight of the plant is equal, the finer the plant is cut, the sooner the antibacterial substance is released.

The liquid obtained after the above-described treatment with the enzyme may be used as it is. Alternatively, the liquid may be made into a supernatant partially purified by conventional filtration and centrifugation or into an isolated liquid or solid product by further filtration and purification, if desired.

For purification, various means usually used such as cation exchanger resins, ammonium sulfate precipitation using ammonium sulfate of 80 % concentration, gel filtration using dextran gel, polyacrylamide gel or agarose gel and the like may be used singly or in optional combination, though the antibacterial substances contained in the liquids treated with the enzyme do not necessarily have similar structures depending upon the plants from which the antibacterial substances are derived.

For example, in the case where a cation exchanger resin is used for a column method, CM-cellulose, Amberlite, CM-Sephadex and CM-TOYOPEARL may be used as resins. In the case of a liquid containing the antibacterial substance obtained by treating sweet potato with protopectinase - S, the supernatant is passed through a column fed with CM-TOYOPEARL buffered with phosphate buffer (pH 7.0) in order that the antibacterial substance is adsorbed, and further a 0.6 M aqueous solution of sodium chloride is passed through the column to elute and separate the antibacterial substance

According to the tests conducted by the present inventor, the antibacterial substances obtained by the above-described method have antibacterial activity against spore forming bacteria typified by bacilli and clostridia and also have antibacterial activity against koji mold of Aspergilli. From this, it is considered that the antibacterial substances suppress the proliferation of spore forming bacteria and koji mold by the action of inhibiting germination of spores.

Accordingly, the antibacterial substances of the present invention can be used for bactericidal or bacteriostatic compositions in various preparations such as aqueous liquid preparations, aerosols, solid preparations (powder, granule) and the like. As ideal carriers for these preparations include carriers known in the field of art such as water, starch, wheat flour, sucrose, glucose, lactose, dextrin and the like. Further, pectin, albumin, arabinan and others may be optionally added to the compositions.

The antibacterial substances of the present invention can be used for preventing food from decaying by being mixed with or sprayed on various kinds of food such as bread, noodles, candies, cookies, soft drinks, nourishing drinks and jellies in process or at the final step in the form of the above-mentioned preparations optionally in combination with other bactericidal agents or bacteriostatic agents. Also the antibacterial substances can be used as products of other industrial fields in the fields of feed, quasi drugs and the like.

Thus, since the antibacterial substances of the present invention can be produced from raw material plants which have been eaten as vegetables, fruit vegetables, medical herbs and others since ancient times, it is specially mentioned that the antibacterial substances can be utilized as means for preventing and exterminating spore forming bacteria by being added to food without causing adverse effects on human beings.

Further, since any parts of plants can be used as materials in the production process and as materials for the antibacterial agents according to the present invention, agricultural products substandard for market as well as cooking scraps are effectively used. Therefore, the invention will make extremely great contributions to society, including the prevention of environmental contamination due to waste food and the creation of new merchandizes, and its economical effect will be unexpectedly great.

The present invention is now explained with reference to examples, which should not be construed to limit the scope of the invention.

### Example 1

An onion (a subterranean stem), 10g (wet weight), was chopped into 0.5 to 1 cm squares and suspended in 10 mL of 100 mM acetate buffer (pH 7). The enzymes shown in Table 1, 4,000 units, were added to the resulting suspension, followed by stirring at 37°C for 5 hours (the activity of the enzymes was determined in accordance with Sakai's method in Methods in Enzymology, Academic Press, vol.161, pp..335 to 350). As a result, the tissue of the onion was disintegrated and a liquid was produced which contained single cells and intracellular substances.

This liquid was filtered with a 20-mesh cloth filter of nylon to obtain a filtrate, which was centrifuged at 2,000g for 5 minutes to completely remove insoluble substances. The anti-bacterial activity of the resulting supernatant was determined by a modification of the cylinder plate method (Antibiotics Handbook, edited by Kazumaro ICHINO and Hiroshi MUROYA, published by Sangyo Tosho, page 181; Summary of Antibiotics, written by Nobuo TANAKA and Shoshiro NAKAMURA, Tokyo University Publishing Association, page 24). More particularly, the supernatant, 50 µL, was fed in 6 mm diameter holes made on a flat plate of a potato dextrose agar medium (Nissui Seiyaku Kabushiki Kaisha) inoculated with spores of Bacillus subtilis, allowed to stand at 15°C for three hours, and then kept at 37°C for 24 hours to allow Bacillus subtilis to proliferate. The diameter of proliferation inhibition circles formed around the holes was measured to determine the antibacterial activity against Bacillus subtilis.

The antibacterial activity was determined to be one unit when the diameter of the proliferation inhibition circle minus the diameter of the hole, i.e., 6 mm, was 1 cm. The antibacterial activity of the enzymes was calculated with use of the enzymes alone and the buffer alone as controls.

The results of this experiment are shown in Table 1.

**Table 1**

| Enzymes Used | Antibacterial Activity (unit/mL) |
|---|---|
| Protopectinase - F ¹⁾ | 43.0 |
| Protopectinase - S ¹⁾ | 44.2 |
| Polymethyl galacturonase - SX1 ²⁾ | 41.0 |
| Protopectinase - L ¹⁾ | 44.3 |
| Protopectinase - T ³⁾ | 21.3 |
| Protopectinase - N ⁴⁾ | 45.1 |
| Controls | 0 |

| | |
|---|---|
| 1) T. Sakai, Methods in Enzymology, Vol. 161, 335-350, 1988, Academic Press | |
| 2) T. Sakai et al., FEBS Letters, Vol. 414, 439 - 443, 1997 | |
| 3) M. Sakamoto et al., Eur.J.Biochem., Vol. 226, 285 - 291, 1994 | |
| 4) T. Sakai et al., Adv.Appl.Microbiol., Vol. 36, 213 - 294, 1993 | |

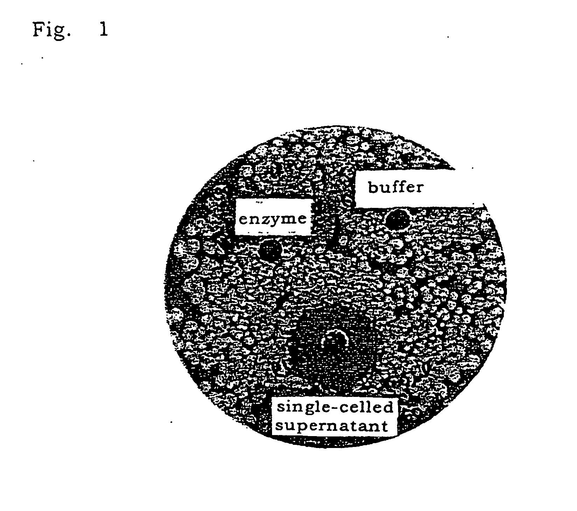

With the controls, Bacillus subtilis grew immediately around the holes, while bacteria did not grow around the holes into which the enzyme-treated supernatants were fed. It was confirmed that the supernatants had remarkable antibacterial activities. Therefore, it is clear that this method can produce a substance inhibiting the growth of Bacillus subtilis from onion (See Fig. 1).

### Example 2

Various species of plants weighting 3g chopped into pieces of 0.5 to 1 cm square were suspended in 10 mL of 100 mM acetate buffer pH7 containing protopectinase - S (500 units). The resulting suspensions were stirred at 37°C for an hour and then were centrifuged in the manner described in Example 1. The antibacterial activity of the supernatants against Bacillus subtilis was determined in the same manner as described in Example 1. The antibacterial activity was recognized with all the plants as shown in Table 2.

**Table 2**

| Plants used (parts) | Antibacterial Activity (unit/mL) |
|---|---|
| Sweet potato (root) | 47.0 |
| Pumpkin (fruit) | 49.3 |
| Cabbage (terrestrial stem and leaves) | 61.2 |
| Garland chrysanthemum (terrestrial stem and leaves) | 34.0 |
| Carrot (root) | 60.2 |
| Potato (subterranean stem) | 61.2 |
| Onion (subterranean stem) | 44.2 |
| Mugwort (terrestrial stem and leaves) | 34.0 |
| Dandelion (terrestrial stem and leaves) | 18.1 |
| Dropwort (terrestrial stem and leaves) | 22.5 |
| Cotton (flowers) | 11.5 |
| Control (enzyme alone) | 0 |

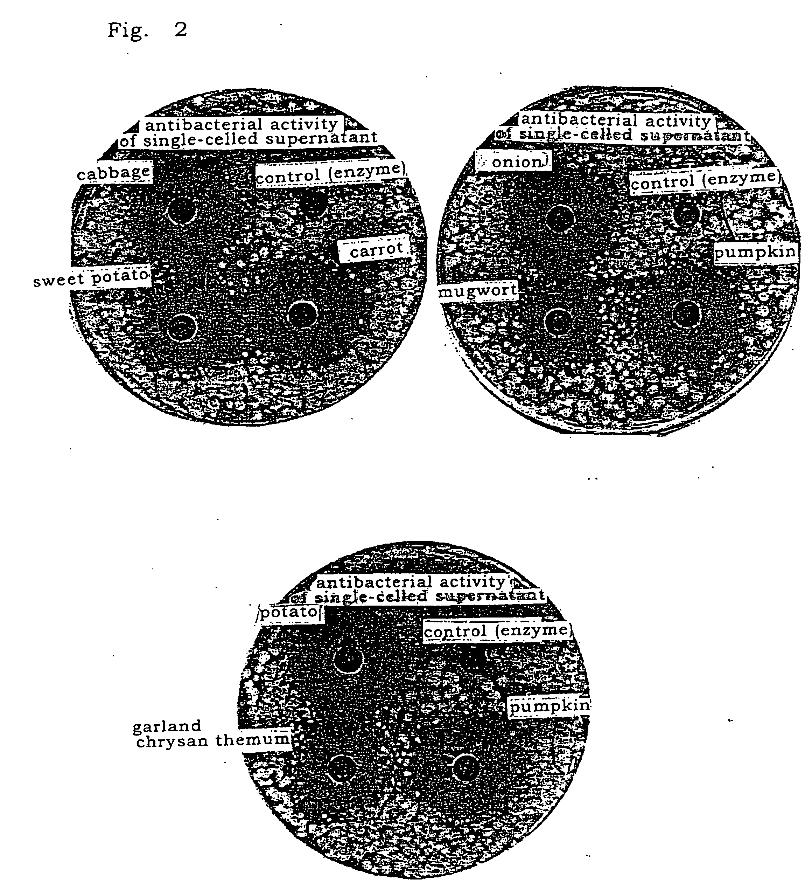

These results clearly show that antibacterial substances exist widely in plants and that plants can be used as materials for antibacterial substances regardless of species and parts (see Fig. 2)

### Example 3

Various species of plants (parts used were the same as in Example 2) were chopped into pieces of 1 to 2 cm square and suspended in 100 mM acetate buffer pH7, and then were completely ground at 5°C using a Waring blender. The supernatants obtained by removing insoluble substances by centrifugation were tested for their antibacterial activity against bacillus subtilis in the same manner as in Example 1.

The results show that the plants had the antibacterial activity as shown in Table 3.

**Table 3**

| Plants used | Antibacterial Activity (unit/mL) |
|---|---|
| Sweet potato | 7.0 |
| Pumpkin | 5.3 |
| Cabbage | 11.2 |
| Garland chrysanthemum | 13.0 |
| Carrot | 6.5 |
| Potato | 7.3 |
| Onion | 34.2 |
| Mugwort | 24.2 |
| Control (enzyme alone) | 0 |

Thus, it was proved that not only liquids obtained by disintegrating plant tissue with enzymes but also liquids of ground plants obtained by mechanical technique contained antibacterial substances.

### Example 4

The activity of liquids containing antibacterial substances prepared from a pumpkin (fruit) and a sweet potato (root) according to the process of Example 1 using protopectinase -S were determined with regard to the microorganisms shown in Table 4.

**Table 4**

| Microorganisms | Antibacterial activity (Activity of sweet potato extract against Bacillus subtilis is assumed to be 100 | |
|---|---|---|
| | Sweet potato ex. | Pumpkin ex. |
| Bacillus subtilis IFO 3134 | 100 | 290 |
| Bacillus cereus IFO 3001 | 113 | 283 |
| Bacillus alvei IFO 14175 | 110 | 300 |
| Bacillus sphaericus IFO 3528 | 98 | 267 |
| Bacillus pumilus IFO 3030 | 132 | 301 |
| Bacillus megaterium AKU 212 | 121 | 305 |
| Bacillus amyloliquefacienece IFO 14141 | 30 | 51 |
| Bacillus circulans IFO 33239 | 32 | 48 |
| Bacillus coagulans IFO 12583 | 30 | 56 |
| Bacillus firms IFO 3330 | 38 | 55 |
| Bacillus licheniformis IFO 14206 | 28 | 42 |
| Bacillus macerance IFO 3490 | 42 | 68 |
| Bacillus natto IFO 3013 | 56 | 80 |
| Clostridium acetobutylicum ATCC 3625 | 81 | 230 |
| Aspergillus awamori IFO 4033 | 11 | 25 |

Table 4 clearly shows that the antibacterial substances produced by the process of the present invention inhibit the growth not only of Bacillus subtilis but also of bacteria belonging to Bacillus family and bacteria belonging to Aspergillus family, and therefore can be used as antibacterial agents.

### Example 5

Sweet potato, 900g, chopped into pieces of about 1 cm square were suspended in a 100 mM phosphate buffer pH 7. Protopectinase - S, 200,000 units, was added to the resulting suspension and the resulting mixture was allowed to react at 37°C for five hours with stirring. The tissue of the sweet potato was completely disintegrated to produce single cells and intercellular liquid.

The single cells in the treated liquid were removed according to Example 1 to give a supernatant containing 60,000 units of an antibacterial substance.

### Example 6

Bean sprouts of black matpe, 1kg, were cut to a length of about 5 mm and suspended in a 100 mM Tris-HCl buffer (pH 7.0) containing 2 % of sodium chloride. Protopectinase (Pectinase - GODO manufactured by Godo Shusei K.K.), 5 g (115,000 I.U.) was added to the resulting suspension and the resulting mixture was allowed to react at 37°C for six hours with stirring. After reaction, cellular residues were filtered off with a nylon mesh and the filtrate was centrifuged at 21,000 g for 20 minutes. The resulting supernatant was observed to have an antibacterial activity of 10 unit/mL.

Pectin, porcine serum albumin, dextrin, arabinan and soluble starch (potato) were added to the supernatant so that the final concentration thereof was 0.5 %. The resulting mixtures were allowed to stand at 10°C for 10 days. Thereafter, the antibacterial activity in the mixtures was determined to give the results shown in Table 5.

Liquids containing the antibacterial substance which were stable were thus obtained by adding various substances.

**Table 5**

| Additive | Antibacterial activity (unit/mL) |
|---|---|
| No additive (control) | 8.0 |
| Pectin | 10.0 |
| Porcine serum albumin | 10.0 |
| Dextrin | 9.5 |
| Arabinan | 10.0 |
| Soluble starch | 10.0 |

### Example 7

Dextrin was added to and dissolved in 10 mL of the supernatant obtained in Example 6 so that the final concentration was 5 %. This solution was lyophilized to produce a powder-form antibacterial composition.

This composition was dissolved in a 2% saline and the antibacterial activity was determined to be 5.5 unit/g. It was confirmed that the antibacterial activity was maintained in a solid state.

### Example 8

Soluble starch (potato) was added to 10 mL of the supernatant obtained in Example 6 so that the final concentration was 5 %. The resulting mixture was stirred well and then dried under vacuum while maintaining the temperature of 10°C or lower.

The thus obtained solid powder was dissolved in a 2 % saline, and a precipitate generated was removed. Then the antibacterial activity in the supernatant was determined. Five units of the antibacterial activity was observed per gram of the solid powder.

Thus the antibacterial composition was produced in a solid state using soluble starch.

According to the present invention, there are provided a process of producing an antibacterial substance derived from a plant, the process including releasing the antibacterial substance by disintegrating at least part of tissue of the plant and a bactericidal or bacteriostatic composition containing, as an effective ingredient, the antibacterial substance obtained by this process.

The antibacterial substance can prevent contamination by spore forming bacteria which has been difficult so far. Also since a wide variety of plants can be used as materials for the antibacterial substance regardless of their species or parts, safe antibacterial substances can be obtained economically.

## Claims

1. A process of producing an antibacterial substance derived from a plant, the process comprising disintegrating at least part of tissue of the plant by the steps consisting of :
(i) optional cutting or grinding the plant to an appropriate size;
(ii) using an enzyme capable of acting on protopectin to release a pectin substance;
(iii) releasing the antibacterial substance therefrom.

2. The process according to claim 1, wherein the enzyme is selected from the group consisting of protopectinases, polymethylgalacturonases, polygalacturonases, arabinases and rhamnogalacturonases.

3. The process according to claim 1 or 2, wherein the enzyme is protopectinase F, S, L, T, C or N or polymethyl galacturonase-SX1.

4. The process according to claim 2 wherein the antibacterial substance is solubilized from middle lamellae together with pectin when protopectinases act on plant which have the nature of inhibiting proliferation of bacteria.

5. The process according to any one of claim 1 to 4, wherein the enzyme is used within a range from pH 2.0 to 10.0 at a temperature of 30 to 40°C.

6. The process according to any one of claims 1 to 5, wherein the plant is selected from the group consisting of cabbage, garland chrysanthemum, mugwort, dandelion, dropwort, potato, onion, sweet potato, carrot, cotton and pumpkin.

## Patentansprüche

1. Verfahren zur Herstellung einer aus einer Pflanze stammenden antibakteriellen Substanz, wobei das Verfahren Desintegration von mindestens einem Teil des Gewebes der Pflanze durch die folgenden Schritte umfasst:
(i) gegebenfalls Beschneidung oder Zerstoßen der Pflanze zu einer zweckmäßigen Größe;
(ii) Verwendung eines Enzymes, das imstande ist, an Protopektin zu wirken, um eine Pektinsubstanz freizusetzen;
(iii) Freisetzung von deren antibakteriellen Substanz.

2. Verfahren nach Anspruch 1, worin das Enzym aus der Gruppe bestehend aus Protopektinasen, Polymethylgalacturonasen, Polygalacturonasen, Arabinasen und Rhamnogalacturonasen ausgewählt ist.

3. Verfahren nach Anspruch 1 oder 2, worin das Enzym Protopektinase F, S, L, T, C oder N oder Polymethyl-Galacturonase-SX1 ist.

4. Verfahren nach Anspruch 2, worin die antibakterielle Substanz von mittleren Lamellen zusammen mit Pektin solubilisiert ist, wenn Protopektinasen an Pflanzen wirken, die die Eigenschaft haben, dass sie die Proliferation der Bakterien hemmen.

5. Verfahren nach einem der Ansprüche 1 bis 4, worin das Enzym in einem Bereich von pH 2,0 bis 10,0 bei einer Temperatur von 30 bis 40°C verwendet wird.

6. Verfahren nach einem der Ansprüche 1 bis 5, worin die Pflanze aus der Gruppe bestehend aus Kohl, Lorbeer, Chrysanthemum, Beifuß, Löwenzahn, Filipendelwurz, Kartoffel, Zwiebel, Süßkartoffel, Möhre, Baumwolle und Kürbis ausgewählt ist.

## Revendications

1. Procédé de production d'une substance anti-bactérienne dérivée d'une plante, le procédé comprenant la désagrégation d'au moins une partie du tissu de la plante selon les étapes consistant à :
(i) facultativement couper ou hacher la plante jusqu'à une taille appropriée ;
(ii) utiliser une enzyme capable d'agir sur la protopectine afin de libérer une substance pectinique ;
(iii) libérer la substance anti-bactérienne à partir de celle-ci.

2. Procédé selon la revendication 1, dans lequel l'enzyme est choisie dans le groupe constitué par les protopectinases, les polyméthylgalacturonases, les polygalacturonases, les arabinases et les rhamnogalacturonases.

3. Procédé selon la revendication 1 ou 2, dans lequel l'enzyme est la protopectinase F, S, L, T, C ou N ou la polyméthyl galacturonase-SX1.

4. Procédé selon la revendication 2 dans lequel la substance anti-bactérienne est solubilisée à partir des lamelles moyennes conjointement avec de la pectine quand les protopectinases qui inhibent par nature la prolifération des bactéries agissent sur la plante.

5. Procédé selon l'une quelconque des revendications 1 à 4, dans lequel l'enzyme est utilisée dans une gamme de pH de 2,0 à 10,0 à une température de 30 à 40°C.

6. Procédé selon l'une quelconque des revendications 1 à 5, dans lequel la plante est choisie dans le groupe constitué par le chou, la laitue chrysanthème, l'armoise commune, le pissenlit, la filipendule, la pomme de terre, l'oignon, la patate douce, la carotte, le coton et la citrouille.
